# EUROPEAN PATENT APPLICATION

(11) **EP 1 437 059 A1**
(43) Date of publication of application: **14.07.2004**
(21) Application number: 03027116.7
(22) Date of filing: 26.11.2003
(51) Int. Cl.: A45B 11/00, B62B 9/14

(54) **Umbrella holder for a perambulator or the like**

(30) Priority: 13.01.2003 IT BG20030001
(71) Applicant: NORAIN DI CALEGARI Aldo & C. s.a.s., 24020 Gorle (Bergamo) (IT)
(72) Inventor: Calegari, Aldo, 24020 Gorle (Bergamo) (IT); Carminati, Barbara, 24020 Gorle (Bergamo) (IT)
(74) Representative: Ripamonti, Enrico, Dr. Ing.

(57) **Abstract**

It consists of a support formed from two arms (51,53) with a hinged joint (54) rotatable through 360°, enabling it to be locked in any angular position by a knob. To the ends of the individual arms there is fixed a double coupling with knob (56,58), allowing one end (55) to be fixed to the wheel-mounted frame and the other end (57) to the handle of the umbrella.

Its practicality, ease of application and minimum overall size mean that the accessory can be considered, as required, either as a fixed accessory (to be left applied) or removable (to be mounted and removed each time). The support when demounted and folded measures 30.50 cm x 18.00 cm x 7.00 cm, and can be kept in the article tray or basket.

## Description

In the case of rain, a pushchair, a perambulator, a wheelchair or in general a frame mounted on wheels and created for conveying persons does not provide for protecting the person pushing the frame against rain; the accessory which solves the problem has now been invented: the traditional umbrella requires the user to use one of the two hands, to the detriment of the steering of the pushchair, perambulator or wheelchair which on the road requires considerable attention and in particular the use of both hands. There was therefore a need to invent an umbrella support with relative fixing to the frame.

An object of the present invention is to provide an umbrella holder which enables the umbrella to be fixed to the frame of a perambulator, wheelchair, pushchair or the like without occupying the user's hands.

This and other objects are attained according to the present invention by an umbrella holder in accordance with the accompanying claims.

Further characteristics and advantages of the invention will be more apparent from the description of a preferred but not exclusive embodiment of the umbrella holder according to the invention, illustrated by way of nonlimiting example in the accompanying drawings, in which:

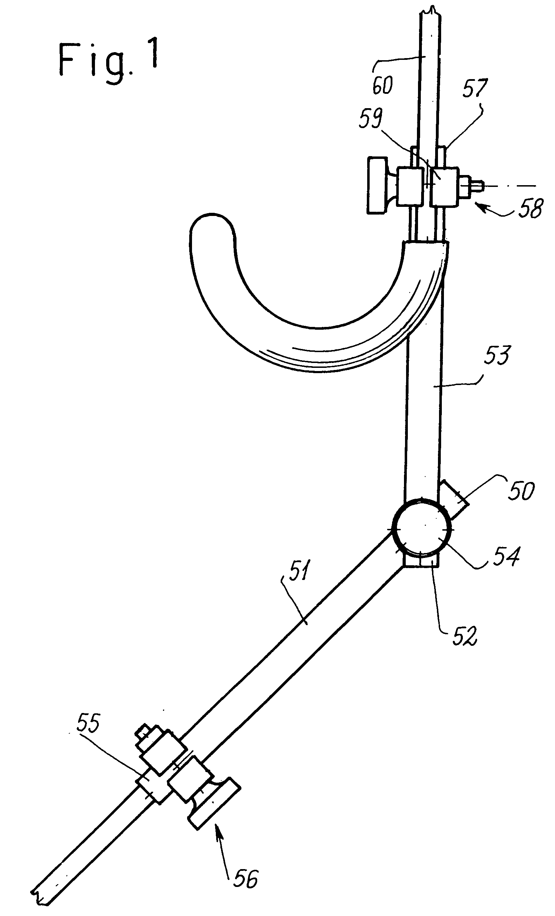

Figure 1 shows the umbrella holder fixed to a perambulator or wheelchair and supporting an umbrella;
Figure 2 shows the hinging between two arms of the umbrella holder;
Figure 3 is a section through a double coupling of the umbrella holder;

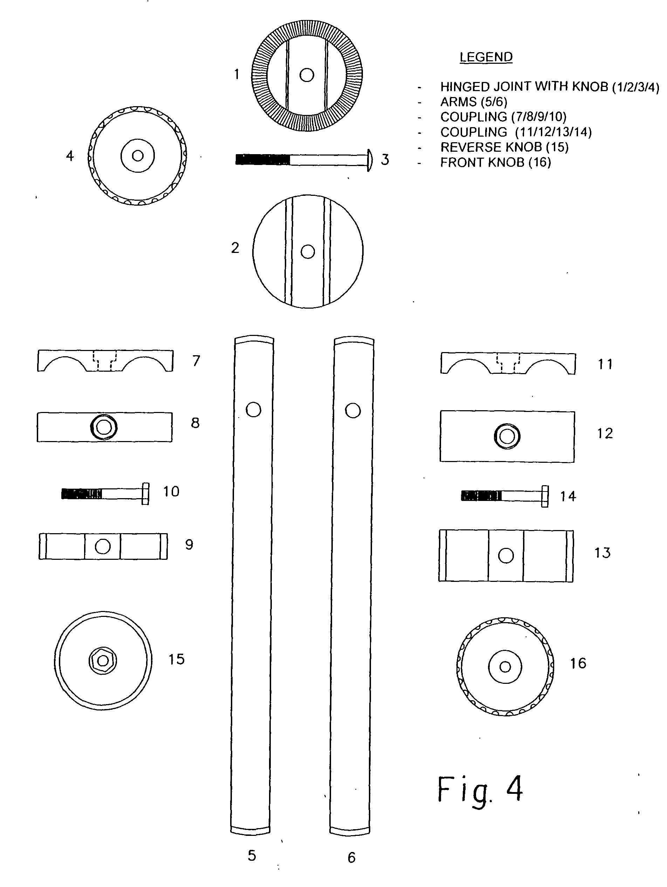

Figure 4 shows all the constructional parts of the umbrella holder;
Figure 5 shows all the constructional parts of a hinged joint;
Figure 6 shows a different embodiment of the hinging between the two arms of the umbrella holder.

The accessory comprises at one end a double coupling to be coupled to the wheeled frame in the most suitable position, using the knob supplied: it is composed of two arms pivoted about a 360°-rotatable hinged joint which enables it to be applied to any frame in such a manner as to ensure the vertical position of the umbrella every time. Having fixed the accessory to the frame in this manner, the hinged joint is operated using the knob, and the second arm (that which has remained free) is orientated upwards into a vertical position, and locked. To the end of the arm there is fixed a double coupling, into the free seat of which the vertical part of the handle of the umbrella to be used is inserted, after slackening the knob supplied, which is then tightened.

After this operation the accessory is ready for the umbrella to be opened to protect the person steering the pushchair, perambulator or wheelchair. By being applied in the most suitable position according to the type or model of the frame, the invention enables it to be closed in the case of foldable frames (pushchair or other) and enables the person seated in the perambulator or wheelchair to be directly protected from the rain if the person does not require a companion but is able to manoeuvre independently by manually operating the wheels.

For example an end 50 of a first arm 51 is connected to one end 52 of a second arm by a hinged joint 54.

A free end 55 of the arm 51 carries fixing means 56 consisting of a double coupling by which the umbrella holder is clamped to the frame of a wheelchair or the like.

One end 57 of the arm 53 carries a double coupling 58 which comprises the seat 59 into which the umbrella 60 is connected.

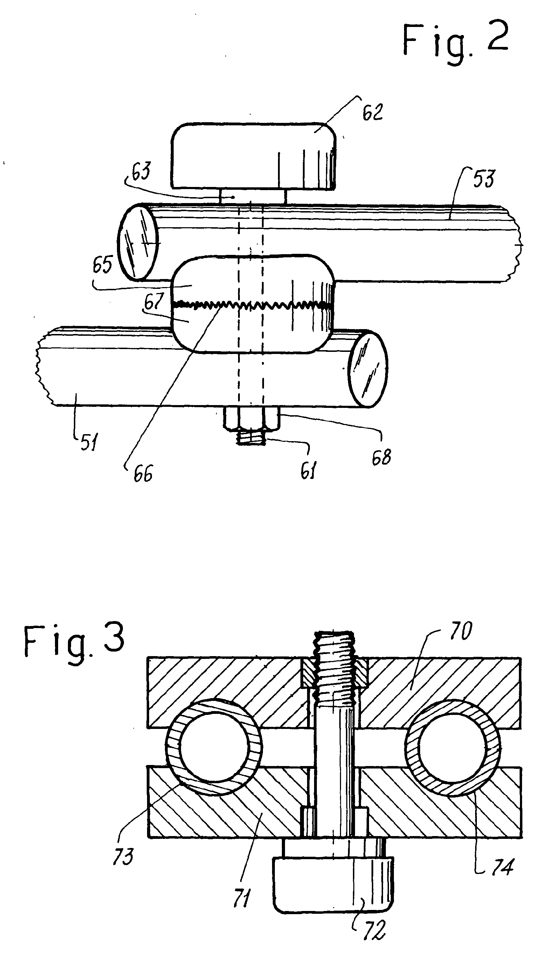

With reference to Figure 2, the hinged joint consists of a screw 61 rigid with a knob 62 which presses with its portion 63 on the arm 53.

The arm 53 is housed in a diametrical concave seat 64 of a disc 65.

The surface of this disc is provided with toothing 66 matching that of another opposing equal disc 67.

The hinged joint also comprises a disc 67 presenting a diametrical concave seat 64 in which the arm 51 is housed.

The screw 61 traverses the arms 51 and 52 diametrically and the discs 65 and 67 to act as a hinge enabling the arms 51 and 53 to be mutually orientated in any position; when brought in position with the required orientation, they are clamped by a female screw (consisting for example of a nut).

Figure 3 shows a double coupling comprising two opposing elements 70, 71 joined by a screw 72.

The elements 70, 71 present two seats 73, 74 housing respectively the perambulator or wheelchair frame and the arm 51 in one case, and the arm 53 and umbrella in the other case.

Modifications and variants are possible.

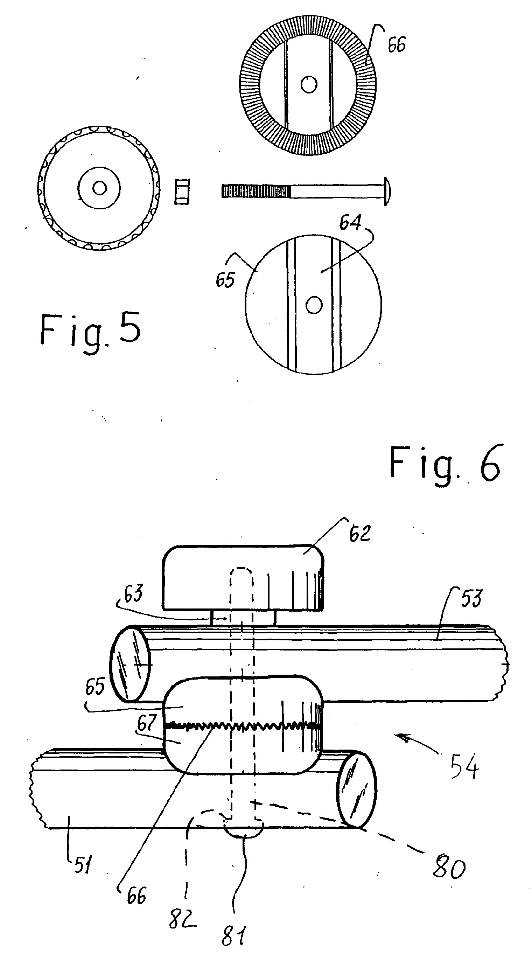

For example, in a different embodiment shown in Figure 6, the hinged joint 54 comprises a screw 80 presenting at one end a large concave head 81 with a right-angled (for example square) under-head 82, the opposite end being threaded and fixable by the knob 62.

When the screw 80 is inserted through the aligned holes and the knob 62 tightened, the under-head 82 becomes inserted into a seat in the arm 51.

## Claims

1. An umbrella holder, **characterised by** comprising a first and a second arm (51, 53) hinged together, said first arm (51) presenting, on its free portion (55), fixing means (56) for fixing said umbrella holder to a frame of a perambulator or wheelchair, said second arm (53) presenting in its free portion a seat (59) for retaining an umbrella (60), in such a manner that the umbrella (60) is retained without occupying the hands of the user.

2. An umbrella holder as claimed in claim 1, **characterised in that** said fixing means (56) comprise a double coupling provided with a control knob for regulating the connection force.

3. An umbrella holder as claimed in one or more of the preceding claims, **characterised in that** said hinging between said first and second arm (51, 53) comprises a hinged joint provided with a control knob for regulating the connection force.

4. An umbrella holder as claimed in one or more of the preceding claims, **characterised in that** said hinged joint presents the facility for mutually positioning said first and second arm (51, 53) through 360° rotation, to enable the umbrella to be always positioned vertically.

5. An umbrella holder as claimed in one or more of the preceding claims, **characterised in that** said seat (59) for retaining said umbrella (60) comprises a free portion of a double coupling connected to the free end of the second arm.

6. An umbrella holder as claimed in one or more of the preceding claims, **characterised in that** said double coupling forming said seat (59) comprises a control knob for regulating the connection force.

7. An umbrella holder as claimed in one or more of the preceding claims, **characterised in that** said hinging between said first and second arm (51, 53) comprises a hinged joint presenting a screw (80) having at one end an enlarged head (81) insertable into one of said tubes (51) and an opposite end fixable by a knob (62).

8. An umbrella holder as claimed in one or more of the preceding claims, **characterised in that** said enlarged head (81) presents at least one right-angled under-head portion (82).

9. An umbrella holder as claimed in one or more of the preceding claims, **characterised in that** at least said arm (51) secured to said screw is formed of PVC.
